# EUROPÄISCHE PATENTANMELDUNG

(11) **EP 4 686 392 A1**
(43) Veröffentlichungstag der Anmeldung: **04.02.2026**
(21) Anmeldenummer: 25183525.2
(22) Anmeldetag: 18.06.2025
(51) Int. Cl.: A01D 41/127

(54) **FAHRASSISTENZSYSTEM FÜR EINE LANDWIRTSCHAFTLICHE ARBEITSMASCHINE**

(30) Priorität: 31.07.2024 DE 102024121764
(71) Anmelder: CLAAS Selbstfahrende Erntemaschinen GmbH, 33428 Harsewinkel (DE)
(72) Erfinder: Wilken, Andreas, 49143 Bissendorf (DE); Vöcking, Henner, 33397 Rietberg (DE); Bussmann, Christoph, 33428 Harsewinkel (DE); Bormann, Bastian, 33334 Gütersloh (DE); Domnik, Matthias, 59302 Oelde (DE); Baumgarten, Joachim, 48361 Beelen (DE); Schulze Vohren, Patrick, 48336 Sassenberg (DE); Dieckmeyer, Sascha, 49326 Melle (DE)
(74) Vertreter: CLAAS Gruppe

(57) **Zusammenfassung**

Die vorliegende Erfindung betrifft ein Fahrerassistenzsystem (28) für eine landwirtschaftliche Arbeitsmaschine (1) mit zumindest einer Steuer- und Regeleinrichtung (23), die mittels in ihr hinterlegter Kennlinienfelder zu einem Optimierungsprozess von Arbeits- und/oder Qualitätsparametern der landwirtschaftlichen Arbeitsmaschine (1) eingerichtet ist, wobei der Optimierungsprozess durch Vorgabe einer von einem Bediener (24) auswählbaren Prozessführungsstrategie erfolgt, wobei das Fahrerassistenzsystem (28) derart ausgestaltet ist, einen Zielkonflikt während der Durchführung des Optimierungsprozesses zu erfassen und mit einem Bediener (24) der landwirtschaftlichen Arbeitsmaschine (1) zu interagieren, um den Zielkonflikt (400) zu überwinden.

## Beschreibung

Die vorliegende Erfindung betrifft ein Fahrerassistenzsystem für eine landwirtschaftliche Arbeitsmaschine gemäß dem Oberbegriff des Anspruches 1.

Es ist allgemein bekannt Arbeits- und Qualitätsparameter einer landwirtschaftlichen Arbeitsmaschine mittels einer Steuer- und Regeleinrichtung zu überwachen und zu optimieren. Dabei können Optimierungsprozesse zum Einsatz kommen, die automatisiert ablaufen und auf Kennlinienfelder zugreifen. Die Kennlinienfelder können in der Steuer- und Regeleinrichtung oder einer Recheneinheit hinterlegt sein. Üblicherweise kann ein Bediener eine auswählbare Prozessführungsstrategie vorgeben. Daraufhin kann der automatisierte Optimierungsprozess zumindest eines Arbeits- und/oder Qualitätsparameters der landwirtschaftlichen Arbeitsmaschine erfolgen.

Die bekannten Optimierungsprozesse gelangen dann an ihre Grenzen, wenn innerhalb einer gewählten Prozessführungsstrategie kein zufriedenstellendes Ergebnis erzielt werden kann. Dies ist häufig dann der Fall, wenn die Eigenschaften des zu erntenden Gutes von den üblicherweise zu erwartenden Ernteguteigenschaften abweichen oder die Beschaffenheit des zu bearbeitenden Territoriums, wie etwa hängiges Gelände, die Arbeitsweise der Arbeitsorgane negativ beeinflusst.

Eine Aufgabe dieser Erfindung liegt darin, ein Fahrerassistenzsystem mit zumindest einer Steuer- und Regeleinrichtung weiterzubilden und zu verbessern.

Diese Aufgabe wird durch die hier offenbarten Ausführungsformen gelöst, die insbesondere durch den Gegenstand der unabhängigen Ansprüche definiert sind. Die abhängigen Ansprüche betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Ein erster Aspekt bezieht sich auf ein Fahrerassistenzsystem für eine landwirtschaftliche Arbeitsmaschine mit zumindest einer Steuer- und Regeleinrichtung, die mittels in ihr hinterlegter Kennlinienfelder zu einem Optimierungsprozess von Arbeits- und/oder Qualitätsparametern der landwirtschaftlichen Arbeitsmaschine eingerichtet ist. Dabei erfolgt der Optimierungsprozess durch Vorgabe einer von einem Bediener auswählbaren Prozessführungsstrategie. Das Fahrerassistenzsystem ist derart ausgestaltet, einen Zielkonflikt während der Durchführung des Optimierungsprozesses zu erfassen und mit einem Bediener der landwirtschaftlichen Arbeitsmaschine zu interagieren, um den Zielkonflikt zu überwinden.

Das Fahrerassistenzsystem kann eine elektronische Zusatzeinrichtung in der landwirtschaftlichen Arbeitsmaschine zur Unterstützung des Bedieners bzw. Fahrers sein. Das Fahrerassistenzsystem kann dabei teilautonom oder autonom ausgeführt sein. Das Fahrerassistenzsystem kann direkt mit Arbeitsorganen der landwirtschaftlichen Arbeitsmaschine verbunden sein. Die Arbeitsorgane können zur Durchführung spezifischer Teilbearbeitungsprozesse eines Gesamtbearbeitungsprozesses zur Verarbeitung von Erntegut vorgesehen sein. Dabei kann jedem Arbeitsorgan ein spezifischer Teilbearbeitungsprozess zugewiesen sein. Ein Teilarbeitsprozess kann beispielsweise ein Dreschprozess, ein Abscheideprozess oder ein Reinigungsprozess sein. Dabei kann der Gesamtbearbeitungsprozess eine Vielzahl von Teilarbeitsprozessen umfassen. Der Gesamtbearbeitungsprozess kann dabei alle Schritte für die Verarbeitung von Erntegut betreffen (bspw. Dreschen, Abscheiden, Reinigen, etc.). Der Bediener kann Informationen an das Fahrerassistenzsystem oder die Steuer- und Regeleinrichtung durch Eingabe übermitteln.

Die Prozessführungsstrategie kann sich auf die geplante und systematische Vorgehensweise zur optimalen Ernte von landwirtschaftlichen Produkten beziehen. Die Prozessführungsstrategie könnte dabei ausgerichtet sein auf maximalen Gutstrom, minimalen Kraftstoffeinsatz, hohe Druschqualität und/oder einen ausgeglichenen Betriebspunkt. Die Prozessführungsstrategie kann die Auswahl des besten Zeitpunkts, der geeigneten Methoden und der erforderlichen Ausrüstung umfassen, um die Qualität und Quantität der Ernte zu maximieren. Durch eine einmalige Auswahl einer Prozessführungsstrategie kann eine Art und Weise der Ansteuerung der Arbeitsorgane vorgegeben werden. Für die Ermittlung der Einstellparameter ist möglicherweise eine weitere Eingabe des Bedieners nicht erforderlich, d.h. die Ermittlung kann automatisch erfolgen. Der Bediener könnte aber die Möglichkeit haben, die gewählte Prozessführungsstrategie auf Wunsch zu ändern, so dass daraufhin weiter eine autonome Ansteuerung stattfinden kann, jedoch dann ggf. mit einer anderen Priorisierung.

Der Optimierungsprozess könnte das Ziel haben, die Einstellparameter der Arbeitsorgane zu ermitteln, um ein Ziel der Prozessführungsstrategie zu erreichen. Der Optimierungsprozess kann automatisiert ablaufen. Der Optimierungsprozess von Arbeits- und/oder Qualitätsparametern könnte so gestaltet sein, dass Sensoren kontinuierlich Daten über die Betriebsbedingungen und die Leistung der landwirtschaftlichen Arbeitsmaschine erfassen. Algorithmen des Optimierungsprozesses könnten diese Daten analysieren, um Muster und Abweichungen zu identifizieren, und daraufhin möglicherweise Anpassungen an den Maschinenparametern vorzunehmen, um die Effizienz und Qualität zu verbessern. Während des Optimierungsprozesses könnten selbstständig bzw. autonom Entscheidungen getroffen werden und möglicherweise Parameter wie Arbeitsgeschwindigkeit, Schnitthöhe oder Korngröße in Echtzeit angepasst werden, um optimale Ergebnisse unter variierenden Bedingungen zu gewährleisten. Bevorzugt kann der Optimierungsprozess mittels der Steuer- und Regeleinrichtung oder einer Recheneinheit automatisch und autonom ausführbar sein, d.h. ohne Eingreifen des Bedieners. Der Optimierungsprozess kann auf Grundlage eines Regelwerkes oder einer Reglerstruktur erfolgen.

Bei den Kennlinienfeldern kann es sich um Daten handeln, die in der Steuer- und Regeleinrichtung hinterlegt sind. Dabei kann die Steuer- und Regeleinrichtung ein übliches digitales Speichermedium aufweisen, beispielsweise ein digitaler Speicherbaustein oder ein Speicherlaufwerk. Hinterlegte Kennlinienfelder können Informationen, die den Zweck haben den Betrieb des Fahrerassistenzsystems und/oder den Betrieb der landwirtschaftlichen Arbeitsmaschine zu steuern und zu optimieren. Kennlinienfelder können eine Beziehung zwischen verschiedenen Betriebsparametern, beispielsweise Arbeits- und/oder Qualitätsparametern, in Form von Kennlinien aufzeigen. Kennlinienfelder können mehrere Kennlinien umfassen. Kennlinien können jeweils unterschiedliche Zustände oder Einstellungen der landwirtschaftlichen Arbeitsmaschine darstellen und die Analyse und Optimierung des Betriebsverhaltens ermöglichen. Kennlinienfelder können beispielsweise in Bereichen wie der Motorentechnik oder der Elektrotechnik verwendet werden, um die Leistungsfähigkeit und Effizienz der landwirtschaftlichen Arbeitsmaschine unter verschiedenen Bedingungen zu visualisieren und zu verstehen.

Arbeits- und/oder Qualitätsparameter einer landwirtschaftlichen Arbeitsmaschine können spezifische Messgrößen und Eigenschaften sein, die den Betrieb und die Leistung der landwirtschaftlichen Arbeitsmaschine bewerten und optimieren. Zu den Arbeitsparametern können beispielsweise die Arbeitsgeschwindigkeit, die Arbeitsbreite, der Kraftstoffverbrauch und/oder die Auslastung der landwirtschaftlichen Arbeitsmaschine gehören. Qualitätsparameter können Aspekte wie die Schnitthöhe beim Mähen, die Korngröße bei der Ernte oder die Reinheit des geernteten Produkts bzw. Ernteguts sein.

Bei dem Zielkonflikt kann es sich um einen Konflikt handeln, der entsteht, wenn ein Ziel gesetzt wird und dieses Ziel nicht erreicht werden kann. Es könnte beispielsweise sein, dass ein Zielkonflikt entsteht, wenn der Optimierungsprozess ein Ziel hat, das während der Durchführung des Optimierungsprozesses nicht erreicht werden kann. Das Fahrerassistenzsystem kann diesen Zielkonflikt erfassen und eine Interaktion mit dem Bediener einleiten. Beispielsweise kann das Fahrerassistenzsystem den Bediener zu einer Eingabe auffordern. Dabei könnte vorteilhafterweise das Prozesswissen des Bedieners mittels der Interaktion bereitgestellt werden. Das heißt, der Bediener könnte sein Fachwissen und seine Erfahrungen durch die Interaktion mit dem Fahrerassistenzsystem direkt in den Ernteprozess einfließen lassen. Dabei kann der Bediener beispielsweise spezifische Einstellungen und Anpassungen an das Fahrerassistenzsystem übermitteln. Die Interaktion mit dem Bediener kann darauf ausgerichtet sein, den Zielkonflikt zu lösen, indem eine Problemlösung oder ein Vorschlag des Bedieners mittels der Interaktion erfasst wird. Eine Zielkonfliktlösung mittels der Interaktion könnte bedeuten, dass Bediener und Fahrerassistenzsystem gemeinsam Probleme identifizieren und Lösungen entwickeln. Die Interaktion könnte ferner so gestaltet sein, dass das Fahrerassistenzsystem zunächst Daten und Vorschläge zur Problemlösung liefert, während der Bediener die endgültige Entscheidung trifft und gegebenenfalls Anpassungen vornimmt. Die Interaktion kann dabei beispielsweise umfassen das Drücken von Tasten, das Drehen von Knöpfen, das Ziehen von Hebeln, das Tippen auf Bildschirme, das Sprechen von Sprachbefehlen, das Schwenken von Joysticks, das Klicken von Mausknöpfen, das Zeichnen auf Touchpads, das Einstellen von Schaltern, das Bewegen von Schiebereglern, das Wischen auf Bildschirmen, das Lesen von Displays, das Eingeben von Codes, das Anpassen von Einstellungen, das Scrollen von Seiten, das Doppelklicken von Symbolen, das Blinken von LEDs, das Blättern von Seiten, das Drehen von Rädchen und/oder das Navigieren durch Menüs.

Eine Ausführungsform des ersten Aspekts bezieht sich auf ein Fahrerassistenzsystem, wobei der Zielkonflikt ein Fehlen von Informationen umfasst. Dabei kann das Fehlen von Informationen optional zum Stopp des Optimierungsprozesses führen. Ferner kann der Zielkonflikt optional ein Nichterreichen einer Zielvorgabe umfassen.

Das Fehlen von Informationen kann beispielsweise bedeuten, dass der Optimierungsprozess nicht mehr weitergeführt werden kann, weil die Informationen zur weiteren Durchführung fehlen. Es könnte demnach sein, dass der Optimierungsprozess nach einer Zeit möglicherweise angehalten oder unterbrochen werden muss, weil diejenigen Informationen fehlen, die für die weitere Optimierung notwendig sind. Es kann sich bei den Informationen beispielsweise um Randbedingungen, Parameter und/oder Messwerte handeln.

Die Zielvorgabe kann die Vorgabe eines Ziels sein, d.h. eine klare, spezifische Anweisung oder ein angestrebtes Ergebnis, das erreicht werden soll. Die Zielvorgabe könnte festlegen, welche Leistungen, Qualitäten oder Zeitrahmen erwartet werden. Die Zielvorgabe kann beispielsweise von einem Bediener oder von der Steuer- und Regeleinrichtung festgelegt worden sein. Die Zielvorgabe kann aus der Prozessführungsstrategie ermittelt werden. Die Zielvorgabe kann dabei möglicherweise während des Optimierungsprozesses änderbar sein, beispielsweise durch den Bediener.

Vorteilhafterweise könnte die Interaktion mit dem Bediener den Zielkonflikt in Form der fehlenden Informationen oder des Nichterreichens der Zielvorgabe überwinden. Die fehlenden Informationen könnten beispielsweise vom Bediener ergänzt werden. Ferner könnte die Zielvorgabe vom Bediener angepasst werden, insbesondere dann, wenn sich während des Optimierungsprozesses herausstellt, dass die Zielvorgabe nicht erreicht werden kann. Dabei könnte der Bediener die Zielvorgabe derart ändern, dass die Zielvorgabe im Optimierungsprozess aus physikalischer Sichtweise erreicht werden kann.

Eine Ausführungsform des ersten Aspekts bezieht sich auf ein Fahrerassistenzsystem, wobei das Fahrerassistenzsystem ein Sensorsystem mit einer Vielzahl von Sensoren zum Erfassen zumindest eines Arbeits- und/oder Qualitätsparameters umfasst. Dabei kann das Sensorsystem eingerichtet sein, den Zielkonflikt während der Durchführung des Optimierungsprozesses zu detektieren. Der Zielkonflikt kann umfassen: Defekt eines Sensors und/oder der Steuer- und Regeleinrichtung;
Von einem Sensor erfasster, fehlerbehafteter Messwert; und/oder Kalibrierungsfehler eines Sensors.

Der Sensor kann ein technisches Bauteil sein, das bestimmte physikalische oder chemische Eigenschaften (physikalisch z. B. Wärmemenge, Temperatur, Feuchtigkeit, Druck, Schallfeldgrößen, Helligkeit, Beschleunigung) und/oder die stoffliche Beschaffenheit seiner Umgebung qualitativ oder als Messgröße quantitativ erfassen kann. Von einem Sensor erfasste Daten (bspw. Arbeits- und/oder Qualitätsparameter) können dem Fahrerassistenzsystem oder der Steuer- und Regeleinrichtung übermittelt werden. Mit anderen Worten kann die Steuer- und Regeleinrichtung mittels der vom Sensor erfassten Daten Berechnungen durchführen. Der vom Sensor erfasste zumindest eine Arbeits- und/oder Qualitätsparameter kann dem Optimierungsprozess zur Verfügung gestellt werden.

Eine Ausführungsform des ersten Aspekts bezieht sich auf ein Fahrerassistenzsystem, wobei der Optimierungsprozess umfasst:
Minimieren einer Differenz zwischen einer Zielgröße und einer Zielvorgabe, wobei die Zielgröße basierend auf einem mathematischen Modell und einer Vielzahl von Einstellparametern ermittelt wird.

Das mathematische Modell kann funktionale Zusammenhänge zwischen einer Zielgröße und mehreren Einstellparametern abbilden. Das Fahrerassistenzsystem kann dazu eingerichtet sein, die eine Zielgröße oder zumindest einen Einstellparameter basierend auf dem mathematischen Modell zu ermitteln. Ferner können zwischen der Zielgröße und der Zielvorgaben eine Differenz gebildet werden, beispielsweise in Form einer Verlustfunktion. Die Verlustfunktion kann möglicherweise während des Optimierungsprozesses minimiert werden, indem die Eingangsgrößen des mathematischen Modells, d.h. beispielsweise die Einstellparameter, schrittweise variiert werden. Es ist demnach möglich, dass die Zielgröße verändert wird, während die Zielvorgabe fix bleibt. Somit kann die Differenz der Zielgröße und der Zielvorgabe schrittweise geändert werden.

Eine Ausführungsform des ersten Aspekts bezieht sich auf ein Fahrerassistenzsystem, wobei das Interagieren mit dem Bediener der landwirtschaftlichen Arbeitsmaschine eine "ex cabine" Aktion oder eine "off cabine" Aktion umfasst.

Bei eine "ex cabine" Aktion kann es sich um eine Aktion handeln, die innerhalb der Fahrzeugkabine der landwirtschaftlichen Arbeitsmaschine getätigt werden kann. Mit anderen Worten kann es sein, dass der Bediener die Fahrzeugkabine nicht verlassen muss, um eine "ex cabine" Aktion durchzuführen. Es kann sich bei der "ex cabine" Aktion um die Betätigung eines Bedienelements handeln, wobei sich das Bedienelement innerhalb der Fahrzeugkabine befindet. Vorteilhafterweise könnte eine "ex cabine" Aktion schnell ausgeführt werden, weil der Bediener die Aktion insbesondere direkt aus der Fahrzeugkabine ausführen könnte. Bei einer "off cabine" Aktion kann es sich um eine Aktion handeln, die eine Handlung oder Tätigkeit außerhalb der Fahrzeugkabine der landwirtschaftlichen Arbeitsmaschine umfasst. Dabei kann die "off cabine" Aktion erfordern, dass der Bediener aus der Fahrzeugkabine aussteigt und eine Handlung an der landwirtschaftlichen Arbeitsmaschine vornimmt. Beispielsweise kann die "off cabine" Aktion das Betätigen eines Hebels oder Schaltgeräts außerhalb der Fahrzeugkabine sein. Es kann sich bei der "off cabine" Aktion um eine Reinigungsaktion eines Sensors oder das Ausrichten eines Arbeitsaggregats handeln. Das Fahrerassistenzsystem könnte dem Bediener insbesondere mitteilen, welche Aktion (d.h. "ex cabine" Aktion oder "off cabine" Aktion) durchzuführen ist.

Eine Ausführungsform des ersten Aspekts bezieht sich auf ein Fahrerassistenzsystem, wobei das Interagieren mit dem Bediener der landwirtschaftlichen Arbeitsmaschine umfasst:
Mitteilen des Zielkonflikts, so dass der Zielkonflikt vom Bediener erfassbar ist; Auffordern, den Zielkonflikt zu beseitigen;
Auffordern Informationen über das zu erntende Gut bereitzustellen; und/oder Auffordern Informationen über einen Maschinenparameter bereitzustellen, wenn der Maschinenparameter von der landwirtschaftlichen Arbeitsmaschine nicht erfassbar ist.

Das Mitteilen des Zielkonflikts kann beispielsweise derart erfolgen, dass eine Anzeige und/oder ein Warnton vom Fahrerassistenzsystem ausgegeben wird. Die Anzeige kann optisch und der Warnton kann akustisch vom Bediener erfasst werden. Nach dem Mitteilen des Zielkonflikts kann der Bediener möglicherweise informiert sein, dass ein Zielkonflikt vorliegt, der mittels einer Interaktion beseitigt werden könnte. Auffordern könnte eine Aufforderung an den Bediener umfassen, aktiv etwas an der landwirtschaftlichen Arbeitsmaschine selbst vorzunehmen. Es könnte sich bei dem Auffordern auch um die Aufforderung handeln, weitere Informationen bereitzustellen. Beispielsweise könnte es sich um Informationen über das zu erntende Gut, beispielsweise Feuchtigkeit oder Schnittlänge, handeln. Ferner könnte es sich um Informationen über einen fehlenden Maschinenparameter handeln, beispielsweise wenn das Fahrerassistenzsystem erkennt, dass von einem Sensor erfasste Daten möglicherweise nicht vorliegen. Es könnte beispielsweise sein, dass ein Fahrerassistenzsystem erkennt, dass die landwirtschaftliche Arbeitsmaschine nicht mit den notwendigen Sensoren ausgestattet ist oder ein Sensor defekt ist. Der Bediener kann aufgefordert werden, einen oder mehrere Sensoren zu reparieren, zu reinigen und/oder zu beschaffen.

Eine Ausführungsform des ersten Aspekts bezieht sich auf ein Fahrerassistenzsystem, wobei das Interagieren mit dem Bediener der landwirtschaftlichen Arbeitsmaschine ein Verändern von Einstellungen des Optimierungsprozesses umfasst.

Dabei kann sich das Verändern optional auf folgende beziehen:
Gewichtung von Zielen;
Startwerte von Optimierungsparametern;
Lockern von Anforderungen oder Einschränkungen; und/oder
Einsatz von Kompromisslösungen.

Mit anderen Worten könnte der Bediener die Einstellungen (d.h. beispielsweise Einstellparameter) des Optimierungsprozesses derart ändern, dass die Optimierung fortgesetzt werden kann. Der Bediener könnte Startwerte für Optimierungsparameter neu festlegen, um den aktuellen Betriebspunkt oder die spezifischen Bedingungen des aktuellen Feldes zu berücksichtigen. Durch das Lockern von Anforderungen oder Einschränkungen, wie beispielsweise die Toleranz für die Zielvorgabe, könnte der Bediener die Möglichkeit der Überwindung des Zielkonflikts erhöhen. Schließlich könnte der Einsatz von Kompromisslösungen die Berücksichtigung mehrerer konkurrierender Ziele bzw. Zielvorgaben ermöglichen, indem der Bediener durch die Interaktion einen optimalen Kompromiss findet, etwa zwischen Treibstoffverbrauch und Erntequalität. Diese flexiblen Anpassungsmöglichkeiten durch Interaktion könnten es dem Bediener erlauben, auf eine Vielzahl von Situationen und Bedingungen in Echtzeit zu reagieren.

Eine Ausführungsform des ersten Aspekts bezieht sich auf ein Fahrerassistenzsystem, wobei der Zielkonflikt überwunden wird, indem dem Fahrerassistenzsystem eine Information mittels der Interaktion mit dem Bediener der landwirtschaftlichen Arbeitsmaschine bereitgestellt wird. Dabei können die Informationen zumindest einen der folgenden umfassen:
Einstellung der Arbeits- und/oder Qualitätsparameter,
Feldgrenzen und/oder Arbeitsbereiche,
Arbeitsgeschwindigkeit,
Wechsel der Arbeitsmodi,
Anpassung an Umweltbedingungen, und/oder
Zustandsinformationen der landwirtschaftlichen Arbeitsmaschine.

Die Einstellung der Arbeits- und/oder Qualitätsparameter könnte sich beispielsweise auf die Anpassung von Betriebsparametern der landwirtschaftlichen Arbeitsmaschine, wie der Dreschtrommeldrehzahl, Siebeinstellungen und Schnitthöhe beziehen, um optimale Leistung und gewünschte Erntequalität zu gewährleisten. Feldgrenzen und/oder Arbeitsbereiche können sich auf die spezifischen geografischen Begrenzungen und Zonen eines Feldes beziehen, innerhalb derer die landwirtschaftliche Arbeitsmaschine operiert. Die Arbeitsgeschwindigkeit könnte sich auf die Geschwindigkeit beziehen, mit der die landwirtschaftliche Arbeitsmaschine operiert, um die Effizienz und Produktivität während des Betriebs zu maximieren. Der Wechsel der Arbeitsmodi könnte sich beispielsweise auf den Wechsel von Pflügen zu Säen oder von Ernten zu Transportieren beziehen, je nach den Anforderungen des Arbeitsprozesses. Die Anpassung an Umweltbedingungen könnte sich auf die Möglichkeit der landwirtschaftlichen Arbeitsmaschine beziehen, Betriebsparameter wie die Schnitthöhe oder Gebläsedrehzahl anzupassen, um möglicherweise auf wechselnde Umweltbedingungen wie Bodenfeuchtigkeit oder Windgeschwindigkeit zu reagieren und die Effizienz der Operation zu optimieren. Die Zustandsinformationen der landwirtschaftlichen Arbeitsmaschine könnte Informationen über den aktuellen Zustand der Maschine umfassen, wie z.B. Motorleistung, Ölstand oder Verschleißteile, die dem Bediener helfen könnten, die Wartungsbedürfnisse der Maschine zu überwachen und rechtzeitig Maßnahmen zu ergreifen, um Ausfallzeiten zu minimieren. Vorteilhafterweise könnte es mittels dieser Informationen möglich sein, die landwirtschaftliche Arbeitsmaschine an spezifische Feldbedingungen und Ernteanforderungen anzupassen, was zu einer effizienteren Ressourcennutzung und höherer Erntequalität führen könnte.

Eine Ausführungsform des ersten Aspekts bezieht sich auf ein Fahrerassistenzsystem, wobei das Fahrerassistenzsystem ein Aktuatorsystem umfasst. Dabei wird das Aktuatorsystem mittels der Interaktion mit dem Bediener der landwirtschaftlichen Arbeitsmaschine veranlasst, den Zielkonflikt zu beseitigen.

Es ist möglich, dass die Steuer- und Regeleinrichtung mit dem Aktuatorsystem oder der Vielzahl von Aktuatoren in Verbindung steht. Somit kann die Steuer- und Regeleinrichtung Signale oder Befehle direkt an das Aktuatorsystem übermitteln. Bei einem Aktuator kann es sich um eine antriebstechnische Baueinheiten handeln, die ein elektrisches Signal (bspw. vom Fahrerassistenzsystem ausgegebene Befehle) in mechanische Bewegungen bzw. Veränderungen physikalischer Größen (bspw. Druck oder Temperatur) umsetzen und damit aktiv in einen gesteuerten Prozess eingreifen. Beispiele für Aktuatoren können Ventile, Zylinder (bspw. Pneumatikzylinder, Hydraulikzylinder, Elektrozylinder), elektromechanische Antriebe, Elektromotoren oder Piezoelemente sein. Der Aktuator kann Teil des Arbeitsorgans sein oder im Arbeitsorgan eingebettet sein. Beispielsweise kann der Aktuator ein Hydraulikmotor sein, der eine Dreschtrommel eines Mähdreschers antreibt.

Vorteilhafterweise könnte das Aktuatorsystem die vom Bediener vorgegebenen Maßnahmen direkt umsetzen, die dafür notwendig sind, den Zielkonflikt zu überwinden. Dies könnte zu einer besonders schnellen und effizienten Umsetzung der Überwindung des Zielkonflikts führen. Ferner könnte mittels des Aktuatorsystems gewährleistet werden, dass das Fahrerassistenzsystem direkten Einfluss auf die landwirtschaftliche Arbeitsmaschine hat und somit Zielkonflikte einfacher lösen könnte.

Eine Ausführungsform des ersten Aspekts bezieht sich auf ein Fahrerassistenzsystem, wobei die Interaktion mit dem Bediener der landwirtschaftlichen Arbeitsmaschine natürlichsprachig erfolgt.

Dies könnte beispielsweise bedeutet, dass der Bediener seine Anweisungen und Anpassungen in natürlicher, gesprochener Sprache übermittelt, anstatt komplexe Steuerungen oder Eingabegeräte zu verwenden. Durch Sprachbefehle könnte der Bediener möglicherweise mühelos Parameter wie Dreschtrommeldrehzahl, Siebeinstellungen oder Fahrgeschwindigkeit anpassen, indem er einfach spricht und somit mit dem Fahrerassistenzsystem interagiert. Diese Form der Interaktion könnte die Bedienung erleichtern und könnte eine intuitive und schnelle Anpassung an die aktuellen Bedingungen im Ernteprozess ermöglichen, wodurch die Effizienz und Benutzerfreundlichkeit der landwirtschaftlichen Arbeitsmaschine erhöht werden.

In einem zweiten Aspekt ist eine landwirtschaftlichen Arbeitsmaschine mit einem Fahrerassistenzsystem nach dem ersten Aspekt vorgesehen.

In einem dritten Aspekt kann ein Verfahren für ein Fahrerassistenzsystem einer landwirtschaftlichen Arbeitsmaschine vorgesehen sein. Das Verfahren kann das Erfassen eines Zielkonflikts während der Durchführung des Optimierungsprozesses umfassen. Ferner kann das Verfahren ein Interagieren mit einem Bediener der landwirtschaftlichen Arbeitsmaschine umfassen. Dabei kann das Intergieren zum Überwinden des Zielkonflikts vorgesehen sein. Das Interagieren kann optional die Eingabe oder Ausgabe von Informationen umfassen. Es kann sich dabei um ein computer-implementiertes Verfahren handeln, wobei die Steuer- und Regelungseinrichtung dazu eingerichtet ist, das computer-implementierte Verfahren durchzuführen.

Weitere Vorteile und Merkmale ergeben sich aus den folgenden Ausführungsformen, die sich zum Teil auf die Figuren beziehen. Die Figuren zeigen die Ausführungsformen nicht immer maßstabsgetreu. Die Abmessungen der verschiedenen Merkmale können insbesondere zur Klarheit der Beschreibung entsprechend vergrößert oder verkleinert sein. Hierzu sind die Figuren zumindest teilweise schematisiert.

Es zeigen:
- Fig. 1: eine schematische Darstellung einer als Mähdrescher ausgeführten landwirtschaftlichen Arbeitsmaschine gemäß einer Ausführungsform;
- Fig. 2: eine schematische Darstellung einer Anzeigestruktur einer Steuer- und Regelungseinrichtung gemäß einer Ausführungsform;
- Fig. 3: eine schematische Darstellung eines mathematischen Modells gemäß einer Ausführungsform;
- Fig. 4: schematische Darstellung eines Zielkonflikts gemäß einer Ausführungsform;
- Fig. 5: schematische Darstellung einer Lösung des Zielkonflikts gemäß einer Ausführungsform.

In der folgenden Beschreibung wird auf die beigefügten Figuren verwiesen, die Teil der Offenbarung sind und bestimmte Aspekte und Ausführungsformen veranschaulichen, unter denen die vorliegende Offenbarung verstanden werden kann. Gleiche Bezugszeichen beziehen sich auf gleiche oder zumindest funktionell oder strukturell ähnliche Merkmale.

Im Allgemeinen gilt ein beschriebenes Verfahren auch für eine entsprechende Vorrichtung zur Durchführung des Verfahrens oder ein entsprechendes System, das ein oder mehrere Vorrichtungen umfasst, und umgekehrt. Wird beispielsweise ein bestimmter Verfahrensschritt beschrieben, so kann eine entsprechende Vorrichtung ein Merkmal zur Durchführung des beschriebenen Verfahrensschrittes enthalten, auch wenn dieses Merkmal in der Abbildung nicht ausdrücklich beschrieben oder dargestellt ist. Wird dagegen beispielsweise ein bestimmtes Gerät auf der Grundlage von Funktionseinheiten beschrieben, kann ein entsprechendes Verfahren einen oder mehrere Schritte zur Durchführung der beschriebenen Funktionalität enthalten, auch wenn diese Schritte in den Abbildungen nicht explizit beschrieben oder dargestellt sind. Ähnlicherweise kann ein System entsprechende Vorrichtungsmerkmal oder Merkmale zur Durchführung eines bestimmten Verfahrensschritts umfassen. Die Merkmale der verschiedenen oben oder unten beschriebenen beispielhaften Aspekte und Ausführungsformen können kombiniert werden, sofern nicht ausdrücklich etwas anderes angegeben ist.

Einzelheiten bezüglich einer landwirtschaftlichen Arbeitsmaschine 1 sind detailliert in der DE 10 2013 106 128 A1 beschrieben, deren Inhalt hiermit vollumfänglich Bestandteil der Offenbarung dieser Patentanmeldung wird.

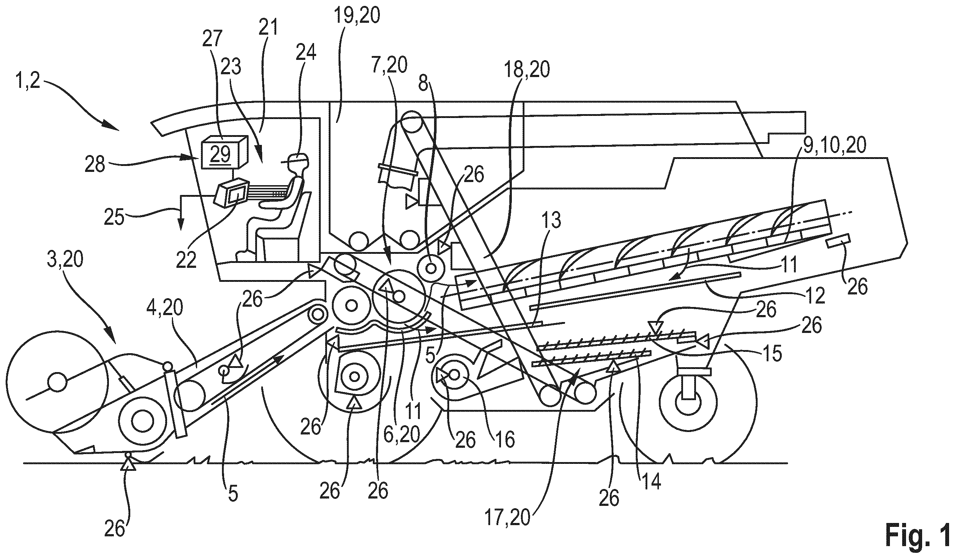

Die in Fig. 1 schematisch dargestellte, als Mähdrescher 2 ausgeführte landwirtschaftliche Arbeitsmaschine 1 nimmt in ihrem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Trennrotor 9 ausgeführte Trenneinrichtung 10 übergeben wird. In dem rotierenden Trennrotor 9 wird der Gutstrom 5 so gefördert, dass in dem Gutstrom 5 enthaltene freibewegliche Körner 11 im untenseitigen Bereich des Trennrotors 9 abgeschieden werden. Es liegt im Rahmen der Erfindung, dass die im dargestellten Ausführungsbeispiel als Trennrotor 9 ausgeführte Trenneinrichtung 10 auch als an sich bekannter und daher nicht dargestellter Hordenschüttler ausgeführt sein kann. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 21 in der zumindest eine mit einer Anzeigeeinheit 22 versehene Steuer- und Regeleinrichtung 23 angeordnet ist, mittels derer automatisch oder vom Bediener 24 der landwirtschaftlichen Arbeitsmaschine 1 initiiert eine Vielzahl von an sich bekannten und daher nicht näher erläuterten Prozessen gesteuert werden können. Die Steuer- und Regeleinrichtung 23 kommuniziert über ein Bussystem 25 in an sich bekannter Weise mit einer Vielzahl von Sensorsystemen 26. Einzelheiten bezüglich der Struktur der Sensorsysteme 26 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 26 nicht nochmals beschrieben wird. Zudem ist die Steuer- und Regeleinrichtung 23 mit einem eine Anzeigeeinheit 27 umfassenden Fahrerassistenzsystem 28 gekoppelt. Es liegt im Rahmen der Erfindung, dass das Fahrerassistenzsystem 28 auch unmittelbar in die Steuer- und Regeleinrichtung 23 integriert sein kann und die Visualisierung der von dem Fahrerassistenzsystem 28 bereitgestellten und nachfolgend noch näher erläuterten Informationen 29 auch unmittelbar in dem der Steuer- und Regeleinrichtung 23 zugeordneten Anzeigeeinheit 22 erfolgt.

Der Mähdrescher 2 kann ferner ein Aktuatorsystem mit einer Vielzahl von Aktuatoren aufweisen. Die Aktuatoren können jeweils Teil einer der Arbeitsorgane 20 sein oder in den Arbeitsorganen 20 eingebettet sein. Beispielsweise ist einer der Aktuatoren ein Hydraulikmotor, der die Dreschorgan 7 des Mähdreschers 2 antreibt. Jeweils eines der Arbeitsorgane 20 kann mittels jeweils eines Aktuators ansteuerbar sein.

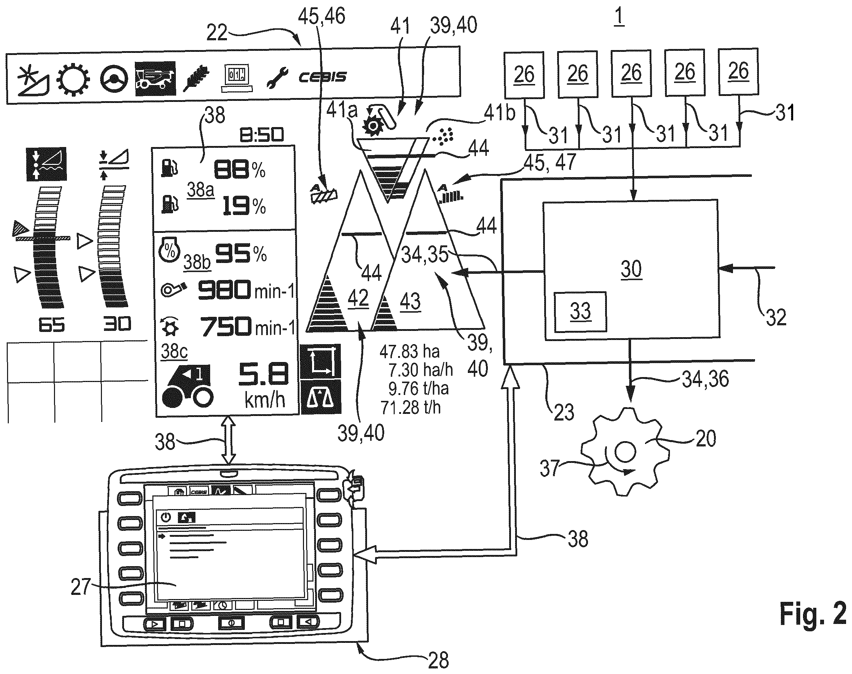

Fig. 2 zeigt eine schematische Darstellung der Anzeigeeinheit 22 der Steuer- und Regeleinrichtung 23 sowie die der Steuer- und Regeleinrichtung 23 zugeordnete und mit der Anzeigeeinheit 22 gekoppelte Recheneinheit 30. Die Recheneinheit 30 ist so beschaffen, dass sie neben den von den Sensorsystemen 26 generierten internen Informationen 31, externe Informationen 32 und in der Recheneinheit 30 selbst hinterlegte Informationen 33, wie etwa Expertenwissen, zu einer Vielzahl von Ausgangssignalen 34 verarbeiten kann. Die Ausgangssignale 34 sind dabei so beschaffen, dass sie zumindest Anzeigesteuersignale 35 und Arbeitsorgansteuersignale 36 umfassen, wobei erstere die Inhalte der Anzeigeeinheit 22 bestimmen und letztere die Änderung der unterschiedlichsten Arbeitsparameter 37 der Arbeitsorgane 20 der landwirtschaftlichen Arbeitsmaschine 1 bewirken, wobei Pfeil 37 symbolisch für die Dreschtrommeldrehzahl steht. Zudem ist die Steuer- und Regeleinrichtung 23, wie bereits beschrieben, mit einem Fahrerassistenzsystem 28 gekoppelt, wobei das Fahrerassistenzsystem 28 so in die landwirtschaftliche Arbeitsmaschine 1 integriert ist, dass es Daten 38 in noch näher zu beschreibender Weise sowohl mit der Steuer- und Regeleinrichtung 23 als auch mit der dieser zugeordneten Anzeigeeinheit 22 austauschen kann. Die in Figur 2 dargestellten Inhalte der Anzeigeeinheiten 22, 27 sind beispielhaft und werden nachfolgend näher beschrieben. Die der Steuer- und Regeleinrichtung 23 zugeordnete Anzeigeeinheit 22 umfasst in ihrem zentralen Bereich ein vom Bediener 24 frei definierbares sogenanntes Hotkey-Fenster 38 in welchem wichtige Maschineninformationen, wie etwa der Füllstand des Kraftstofftanks 38a, Maschinenparametereinstellungen 38b und die Fahrgeschwindigkeit 38c visualisiert sind.

Die Anzeigeeinheit 22 umfasst in ihrem rechtsseitigen Bereich Anzeigeelemente 39 zur Visualisierung aktueller Werte bestimmter Qualitätsparameter 40 der landwirtschaftlichen Arbeitsmaschine 1. Im dargestellten Ausführungsbeispiel visualisiert das obenseitig angeordnete Anzeigeelement 39 die Zusammensetzung der sogenannten "Überkehr" 41, wobei die linkseitige Darstellung das "Überkehrvolumen" 41a und die rechtsseitige Darstellung den "Kornanteil in der Überkehr" 41b visualisiert. Das untere, linke Anzeigeelement 39 visualisiert die sogenannten "Abscheideverluste" 42, d.h. diejenigen Kornverluste, die von der als Trennrotor 9 oder Hordenschüttler ausgeführten Trenneinrichtung 10 im rückwärtigen Bereich der landwirtschaftlichen Arbeitsmaschine 1 aus dieser ausgetragen und nicht in den Korntank 19 gefördert werden. Das untere, rechte Anzeigeelement 39 visualisiert die sogenannten "Reinigungsverluste" 43, wobei hier diejenigen Kornverluste angezeigt werden, die von der Reinigungseinrichtung 17 in analoger Weise zur Trenneinrichtung 10 aus der landwirtschaftlichen Arbeitsmaschine 1 ausgetragen und nicht in den Korntank 19 gefördert werden. Jedes der Anzeigeelemente 39 umfasst zudem einen als waagerechten Strich ausgeführten Sollwertanzeiger 44, der das maximal zulässige und vom Bediener 24 zuvor definierte Verlustniveau des jeweiligen Qualitätsparameters 40 definiert, sodass der Bediener 24 schnell erfassen kann, ob die landwirtschaftliche Arbeitsmaschine 1 eine hinreichende Arbeitsqualität aufweist.

Die Steuer- und Regeleinrichtung 23 des Fahrerassistenzsystems 28 ist eingerichtet mittels in ihr hinterlegter Kennlinienfelder zu einer automatisierbaren Optimierungsprozess von Arbeits- und/oder Qualitätsparametern der landwirtschaftlichen Arbeitsmaschine 1. Dabei erfolgt durch Vorgabe einer von dem Bediener 24 auswählbaren Prozessführungsstrategie ein automatisierter Optimierungsprozess zumindest eines Arbeits- und/oder Qualitätsparameters der landwirtschaftlichen Arbeitsmaschine 1. Das Fahrerassistenzsystem 28 ist derart ausgestaltet, einen Zielkonflikt während der Durchführung des Optimierungsprozesses zu erfassen und mit einem Bediener 24 der landwirtschaftlichen Arbeitsmaschine 1 zu interagieren, um den Zielkonflikt zu überwinden.

Beispielsweise kann der Bediener 24 als Prozessführungsstrategie einen maximalen Gutstrom 5 für den Mähdreschers 2 auswählen. Daraufhin kann die Steuer- und Regeleinrichtung 23 einen Optimierungsprozess durchführen, mit dem Ziel die Einstellparameter für die Arbeitsorgane 20 zu bestimmen. Die Einstellparameter können beispielsweise eine Dreschtrommeldrehzahl, eine Dreschkorbweite, eine Rotordrehzahl, eine Gebläsedrehzahl oder eine Stellung einer Rotorabdeckung sein.

Zur Bestimmung der Einstellparameter kann ein mathematisches Modell vorgesehen sein, das funktionale Zusammenhänge zwischen einer Zielgröße und mehreren Einstellparametern bildet. Im vorliegenden Fall kann die Zielgröße der maximale Gutstrom 5 sein. Es kann vorgesehen sein, dass eine Zielvorgabe durch die Prozessführungsstrategie oder durch den Bediener 24 vorgegeben wird. Beispielsweise kann die Zielvorgabe sich darauf beziehen, dass ein maximaler Gutstrom 5 von 40 Tonnen pro Stunde erreicht werden soll. Zwischen der Zielgröße und der Zielvorgabe kann eine Differenz gebildet werden. Der Optimierungsprozess kann in einem Schritt umfassen, dass die Differenz zwischen der Zielgröße und der Zielvorgabe minimiert wird, wobei die Zielgröße basierend auf dem mathematischen Modell und der Vielzahl von Einstellparametern ermittelt wird. Dies kann durch einen Algorithmus erreicht werden, der die Zielgröße basierend auf dem mathematischen Modell berechnet, wobei die Eingangsgrößen des mathematischen Modells, d.h. die Einstellparameter, schrittweise variiert werden. Es ist demnach möglich, dass die Zielgröße verändert wird, während die Zielvorgabe fix bleibt. Somit kann die Differenz der Zielgröße und der Zielvorgabe schrittweise geändert werden. Das Fahrerassistenzsystem 28 ist derart ausgestaltet, einen Zielkonflikt während der Durchführung des Optimierungsprozesses zu erfassen und mit dem Bediener 24 des Mähdreschers 2 zu interagieren, um den Zielkonflikt zu überwinden.

Das Fahrerassistenzsystem 28 kann beispielsweise erfassen, dass die Zielvorgabe nicht erreicht wird. Wird beispielsweise nach einer vorbestimmten Optimierungszeit die Zielvorgabe nicht erreicht, kann das Fahrerassistenzsystem 28 einstufen, dass ein Zielkonflikt vorliegt. Das Fahrerassistenzsystem 28 kann den Zielkonflikt erfassen, den Optimierungsprozess anhalten und eine Interaktion mit dem Bediener 24 einleiten. Dem Bediener 24 kann mittels der Anzeigeeinheit 27 eine Aufforderung angezeigt werden. Beispielsweise kann das Fahrerassistenzsystem 28 den Bediener 24 zu einer Eingabe auffordern. Dabei könnte der Bediener eine neue Zielvorgabe, d.h. einen anderen Wert für den maximaler Gutstrom 5, eingeben. Beispielsweise kann der Bediener 24 für den maximalen Gutstrom 5 den Wert 20 Tonnen pro Stunde eingeben. Der Bediener 24 hat die Möglichkeit, die Zielvorgabe derart zu ändern, dass die Zielvorgabe im Optimierungsprozess aus physikalischer Sichtweise erreicht werden kann. Somit kann vorteilhafterweise das Prozesswissen des Bedieners 24 (bspw. über den maximalen Gutstrom 5) mittels der Interaktion bereitgestellt werden. Das heißt, der Bediener 24 kann sein Fachwissen und seine Erfahrungen durch die Interaktion mit dem Fahrerassistenzsystem 28 direkt in den Ernteprozess einfließen lassen. Somit kann der Bediener 24 mittels der Interaktion mit dem Fahrerassistenzsystem 28 dazu beitragen, dass der Zielkonflikt gelöst wird. Die Interaktion mit dem Bediener 24 kann natürlichsprachig erfolgen. Dies könnte beispielsweise bedeuten, dass der Bediener 24 den Wert für den maximalen Gutstrom 5 in natürlicher, gesprochener Sprache übermittelt, anstatt manuell in das Fahrerassistenzsystem 28 einzugeben.

Alternativ kann das Fahrerassistenzsystem 28 erfassen, dass der Zielkonflikt von einem ungünstigen Maschinenparameter abhängt. Beispielsweise kann es sein, dass bei einem bestimmten Wert eines Maschinenparameters für ein Arbeitsorgan die Zielvorgabe, d.h. ein maximaler Gutstrom 5, nicht erreicht werden kann, unabhängig davon welche Einstellparameter mittels des Optimierungsprozesses bestimmt werden. Das Fahrerassistenzsystem 28 kann erfassen, dass der Maschinenparameter für das Erreichen der Zielvorgabe nicht geeignet ist. Das Fahrerassistenzsystem 28 kann eine Interaktion mit dem Bediener 24 einleiten, wobei das Interagieren mit dem Bediener 24 eine "ex cabine" Aktion oder eine "off cabine" Aktion umfassen kann.

Bei der "ex cabine" Aktion kann es sich um eine Aktion handeln, die aus der Fahrzeugkabine 21 des Mähdreschers 2 getätigt werden kann und bei der der Bediener 24 die Fahrzeugkabine 21 nicht verlassen muss. Es kann sich bei der "ex cabine" Aktion um die Betätigung eines Bedienelements handeln, wobei sich das Bedienelement innerhalb der Fahrzeugkabine 21 befindet. Nachdem das Bedienelement betätigt wurde kann das Aktuatorsystem die Maßnahmen direkt umsetzen, die dafür notwendig sind, den Zielkonflikt zu überwinden. Dies könnte zu einer besonders schnellen und effizienten Umsetzung der Überwindung des Zielkonflikts führen.

Die "off cabine" Aktion kann erfordern, dass der Bediener 24 aus der Fahrzeugkabine 21 aussteigen und eine Handlung am Mähdrescher 2 vornehmen muss. Beispielsweise kann die "off cabine" Aktion das Betätigen eines Hebels oder Schaltgeräts außerhalb der Fahrzeugkabine 21 sein.

Alternativ kann das Fahrerassistenzsystem 28 erfassen, dass der Zielkonflikt ein Fehlen von Informationen umfasst. Das Fehlen von Informationen kann zum Stopp des Optimierungsprozesses führen. Es ist beispielsweise möglich, dass ein Sensor des Sensorsystems 26 defekt oder verschmutzt ist. Somit könnte es sein, dass keine Daten oder fehlerbehaftete Daten vom Sensorsystem 26 erfasst werden. Das Fahrerassistenzsystem 28 kann erkennen, dass die vom Sensorsystem 26 bereitgestellten Informationen fehlen oder fehlerbehaftet sind. Daraufhin kann der Bediener 24 aufgefordert werden, einen oder mehrere Sensoren des Sensorsystem 26 zu reparieren und/oder zu reinigen. Nachdem der Bediener den Sensor repariert oder gereinigt hat, kann das Fahrerassistenzsystem 28 Informationen sammeln, die für den Optimierungsprozess notwendig sind. Der Zielkonflikt ist somit gelöst.

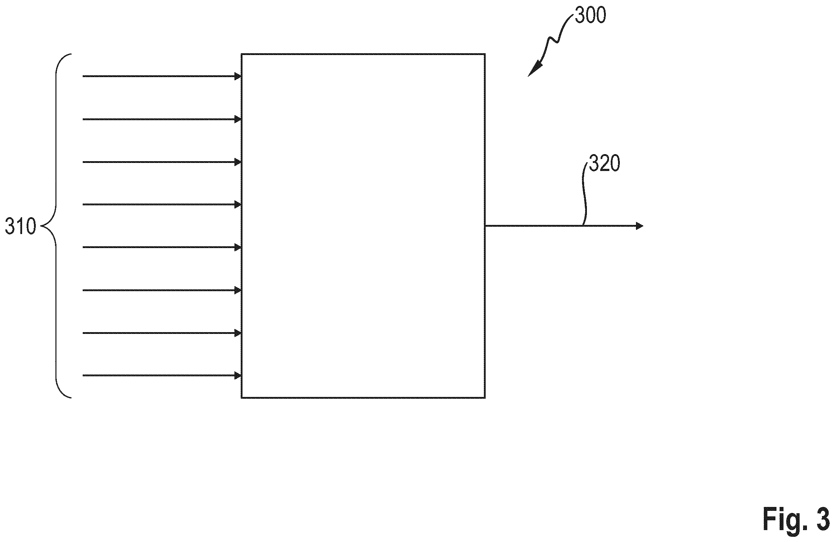

Fig. 3 zeigt eine schematische Darstellung eines mathematischen Modells 300 gemäß einer Ausführungsform.

Das mathematische Modell 300 bildet funktionale Zusammenhänge zwischen einer Zielgröße 320 und mehreren Einstellparametern 310 ab. Das Fahrerassistenzsystem 28 kann dazu eingerichtet sein, die Zielgröße 320 basierend auf dem mathematischen Modell 300 und mehreren Einstellparametern 310 zu ermitteln. Im einfachsten Fall handelt es sich bei dem mathematischen Modell 300 um ein Regressionsmodell.

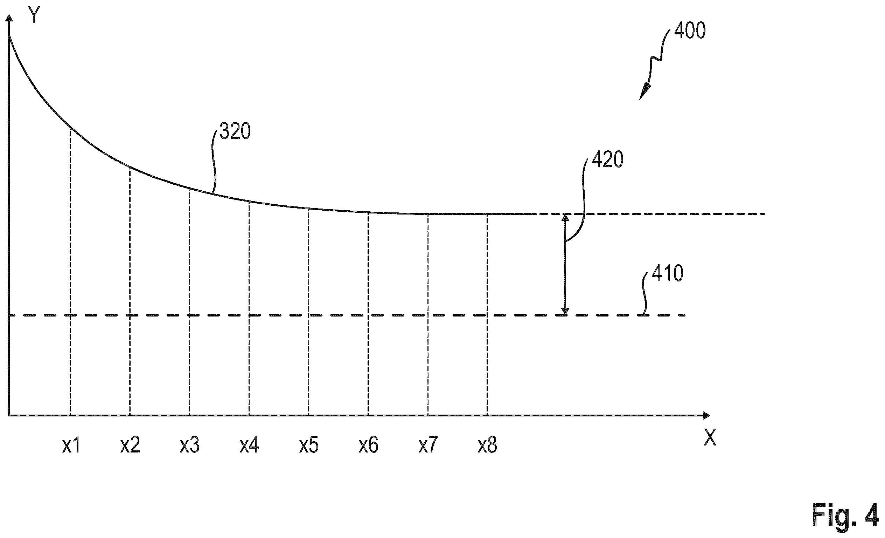

Fig. 4 zeigt eine schematische Darstellung eines Zielkonflikts 400 gemäß einer Ausführungsform.

Während des Optimierungsprozesses kann die Zielgröße 320 mittels des mathematischen Modells 300 für verschiedene Optimierungsschritt x1 bis x8 berechnet werden. Ziel des Optimierungsprozesses kann es sein, dass die Zielgröße 320 eine Zielvorgabe 410 erreicht. Dafür können die Einstellparameter 310 schrittweise variiert werden. Das heißt, dass die Zielgröße 320 für jeden Optimierungsschritt x1 bis x8 mit unterschiedlichen Werten für die Einstellparameter 310 ermittelt wird. Die Zielvorgabe 410 kann dabei fix bleiben, d.h. es wird ein fixer Wert für die Zielvorgabe 410 vorgegeben. Ein Beispiel für die Zielvorgabe ist ein minimaler Kraftstoffverbrauch.

Es kann vorkommen, dass die Zielvorgabe 410 während des Optimierungsprozess nicht erreicht werden kann. Demnach könnte sich eine Abstand 420 (auch "offset" genannt) zwischen der Zielgröße 320 und Zielvorgabe 410 einstellen, die selbst nach einer langen Optimierung bzw. Optimierungszeit weiterhin vorliegt. Das Fahrerassistenzsystem 28 kann erfassen, dass die Zielvorgabe 320 nicht erreicht wird, indem der Abstand 420 detektiert wird. Somit kann das Fahrerassistenzsystem 28 einen Zielkonflikt 400 erfassen.

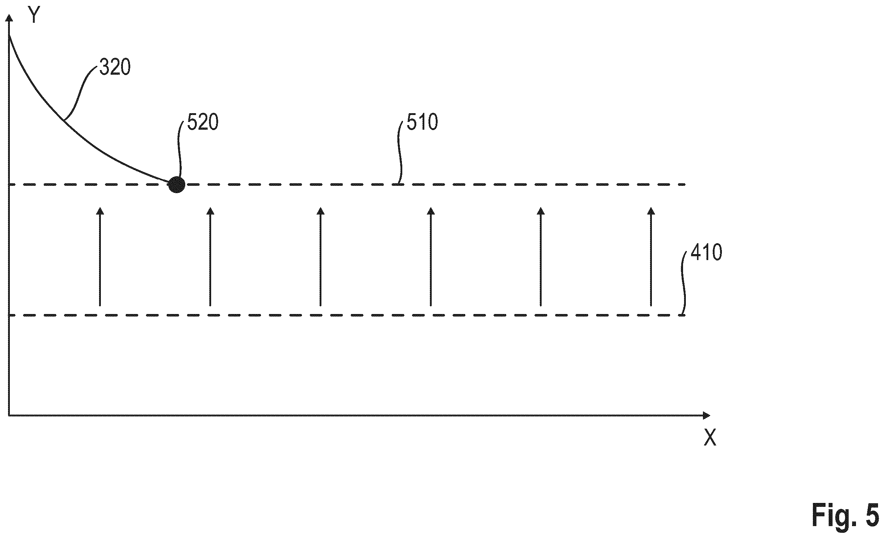

Fig. 5 zeigt eine schematische Darstellung einer Lösung des Zielkonflikts gemäß einer Ausführungsform.

Es ist möglich, dass der Bediener 24 mittels Interaktion mit dem Fahrerassistenzsystem 28 eine Einstellung des Optimierungsprozess ändert, um den Zielkonflikt zu lösen. Beispielsweise kann der Bediener die Zielvorgabe 410 ändern, indem er eine neue Zielvorgabe 510 vorgibt. Der Bediener 24 kann somit die Anforderungen an die Optimierung lockern. Der Optimierungsprozess kann daraufhin erneut gestartet werden, wobei die neue Zielvorgabe 510 berücksichtigt wird. Während des Optimierungsprozesses kann die Zielgröße 320 berechnet werden und die Einstellparameter 310 so lange variiert werden, bis ein Punkt 520 erreicht ist, an dem die Zielgröße 320 der neuen Zielvorgabe 510 entspricht. Der Zielkonflikt 400 ist somit gelöst.

**Bezugszeichenliste:**

| | | | |
|---|---|---|---|
| 1 | landwirtschaftliche Arbeitsmaschine | 31 | interne Information |
| 2 | Mähdrescher | 32 | externe Information |
| 3 | Getreideschneidwerk | 33 | Information |
| 4 | Schrägförderer | 34 | Ausgangssignal |
| 5 | Erntegutstrom | 35 | Anzeigesignal |
| 6 | Dreschkorb | 36 | Arbeitsorgansignal |
| 7 | Dreschorgan | 37 | Arbeitsparameter |
| 8 | Umlenktrommel | 38 | Hotkey-Fenster |
| 9 | Trennrotor | 39 | Anzeigeelement |
| 10 | Trenneinrichtung | 40 | Qualitätsparameter |
| 11 | Körner | 41 | Überkehr |
| 12 | Rücklaufboden | 41a | Überkehrvolumen |
| 13 | Zuführboden | 41b | Kornanteil in der Überkehr |
| 14 | Siebebene | 42 | Abscheideverlust |
| 15 | Siebebene | 43 | Reinigungsverlust |
| 16 | Gebläse | 44 | Sollwertanzeiger |
| 17 | Reinigungseinrichtung | | |
| 18 | Elevator | | |
| 19 | Korntank | | |
| 20 | Arbeitsorgan | | |
| 21 | Fahrzeugkabine | | |
| 22 | Anzeigeeinheit | | |
| 23 | Steuer- und Regeleinrichtung | | |
| 24 | Bediener | | |
| 25 | Bussystem | | |
| 26 | Sensorsystem | | |
| 27 | Anzeigeeinheit | | |
| 28 | Fahrerassistenzsystem | | |
| 29 | Informationen | | |
| 30 | Recheneinheit | | |
| 300 | Mathematisches Modell | | |
| 310 | Einstellparameter | | |
| 320 | Zielgröße | | |
| 400 | Zielkonflikt | | |
| 410 | Zielvorgabe | | |
| 420 | Abstand | | |
| 510 | Neue Zielvorgabe | | |
| 520 | Punkt | | |
| x1 | Optimierungsschritt | | |
| x2 | Optimierungsschritt | | |
| x3 | Optimierungsschritt | | |
| x4 | Optimierungsschritt | | |
| x5 | Optimierungsschritt | | |
| x6 | Optimierungsschritt | | |
| x7 | Optimierungsschritt | | |
| x8 | Optimierungsschritt | | |

## Patentansprüche

1. Fahrerassistenzsystem (28) für eine landwirtschaftliche Arbeitsmaschine (1) mit zumindest einer Steuer- und Regeleinrichtung (23), die mittels in ihr hinterlegter Kennlinienfelder zu einem Optimierungsprozess von Arbeits- und/oder Qualitätsparametern der landwirtschaftlichen Arbeitsmaschine (1) eingerichtet ist, wobei der Optimierungsprozess durch Vorgabe einer von einem Bediener (24) auswählbaren Prozessführungsstrategie erfolgt,
**dadurch gekennzeichnet, dass** das Fahrerassistenzsystem (28) derart ausgestaltet ist, einen Zielkonflikt während der Durchführung des Optimierungsprozesses zu erfassen und mit einem Bediener (24) der landwirtschaftlichen Arbeitsmaschine (1) zu interagieren, um den Zielkonflikt (400) zu überwinden.

2. Fahrerassistenzsystem (28) nach Anspruch 1, wobei der Zielkonflikt (400) ein Fehlen von Informationen umfasst, wobei das Fehlen von Informationen optional zum Stopp des Optimierungsprozesses führt, und/oder wobei der Zielkonflikt (400) optional ein Nichterreichen einer Zielvorgabe (410) umfasst.

3. Fahrerassistenzsystem (28) nach Anspruch 1 oder 2, wobei das Fahrerassistenzsystem (28) ein Sensorsystem mit einer Vielzahl von Sensoren zum Erfassen zumindest eines Arbeits- und/oder Qualitätsparameters umfasst, wobei das Sensorsystem eingerichtet ist, den Zielkonflikt (400) während der Durchführung des Optimierungsprozesses zu detektieren, wobei der Zielkonflikt (400) umfasst:
Defekt eines Sensors und/oder der Steuer- und Regeleinrichtung (23);
Von einem Sensor erfasster, fehlerbehafteter Messwert; und/oder Kalibrierungsfehler eines Sensors.

4. Fahrerassistenzsystem (28) nach einem der vorhergehenden Ansprüche, wobei der Optimierungsprozess umfasst:
Minimieren einer Differenz zwischen einer Zielgröße (320) und einer Zielvorgabe (410), wobei die Zielgröße (320) basierend auf einem mathematischen Modell (300) und einer Vielzahl von Einstellparametern (310) ermittelt wird.

5. Fahrerassistenzsystem (28) nach einem der vorhergehenden Ansprüche, wobei das Interagieren mit dem Bediener (24) der landwirtschaftlichen Arbeitsmaschine (1) eine "ex cabine" Aktion oder eine "off cabine" Aktion umfasst.

6. Fahrerassistenzsystem (28) nach einem der vorhergehenden Ansprüche, wobei das Interagieren mit dem Bediener (24) der landwirtschaftlichen Arbeitsmaschine (1) umfasst:
Mitteilen des Zielkonflikts (400), so dass der Zielkonflikt (400) vom Bediener (24) erfassbar ist;
Auffordern, den Zielkonflikt (400) zu beseitigen;
Auffordern Informationen über das zu erntende Gut bereitzustellen; und/oder Auffordern Informationen über einen Maschinenparameter bereitzustellen, wenn der Maschinenparameter von der landwirtschaftlichen Arbeitsmaschine (1) nicht erfassbar ist.

7. Fahrerassistenzsystem (28) nach einem der vorhergehenden Ansprüche, wobei das Interagieren mit dem Bediener (24) der landwirtschaftlichen Arbeitsmaschine (1) ein Verändern von Einstellungen des Optimierungsprozesses umfasst,
wobei sich das Verändern optional auf folgende bezieht:
Gewichtung von Zielen;
Startwerte von Optimierungsparametern;
Lockern von Anforderungen oder Einschränkungen; und/oder Einsatz von Kompromisslösungen.

8. Fahrerassistenzsystem (28) nach einem der vorhergehenden Ansprüche, wobei der Zielkonflikt (400) überwunden wird, indem dem Fahrerassistenzsystem (28) eine Information mittels der Interaktion mit dem Bediener (24) der landwirtschaftlichen Arbeitsmaschine (1) bereitgestellt wird, wobei die Informationen zumindest einen der folgenden umfassen:
Einstellung der Arbeits- und/oder Qualitätsparameter,
Feldgrenzen und/oder Arbeitsbereiche,
Arbeitsgeschwindigkeit,
Wechsel der Arbeitsmodi,
Anpassung an Umweltbedingungen, und/oder
Zustandsinformationen der landwirtschaftlichen Arbeitsmaschine (1).

9. Fahrerassistenzsystem (28) nach einem der vorhergehenden Ansprüche, wobei das Fahrerassistenzsystem (28) ein Aktuatorsystem umfasst, wobei das Aktuatorsystem mittels der Interaktion mit dem Bediener (24) der landwirtschaftlichen Arbeitsmaschine (1) veranlasst wird, den Zielkonflikt (400) zu beseitigen.

10. Fahrerassistenzsystem (28) nach einem der vorhergehenden Ansprüche, wobei die Interaktion mit dem Bediener (24) der landwirtschaftlichen Arbeitsmaschine (1) natürlichsprachig erfolgt.

11. Landwirtschaftlichen Arbeitsmaschine (1) mit einem Fahrerassistenzsystem (28) nach einem der vorhergehenden Ansprüche.
